# EUROPEAN PATENT SPECIFICATION

(11) **EP 3 854 215 B1**
(45) Date of publication and mention of the grant of the patent: **31.01.2024**
(21) Application number: 19861962.9
(22) Date of filing: 12.09.2019
(51) Int. Cl.: A23C 9/133

(54) **FERMENTED DAIRY PRODUCT THAT IS A SOURCE OF FIBRE AND PROBIOTICS WITH VEGETABLE JAM**
FERMENTIERTES MILCHPRODUKT, DAS EINE QUELLE FÜR BALLASTSTOFFE UND PROBIOTIKA IST, MIT PFLANZENMARMELADE
PRODUIT LACTÉ FERMENTÉ SOURCE DE FIBRE ET PROBIOTIQUES AVEC DE LA CONFITURE VÉGÉTALE

(30) Priority: 19.09.2018 ES 201831412 U
(43) Date of publication of application: 28.07.2021
(73) Proprietor: Consejo Superior de Investigaciones Científicas (CSIC), 28006 Madrid (ES); Pronat SC, 06400 Don Benito (Badajoz) (ES)
(72) Inventor: REQUENA ROLANÍA, Teresa, 28049 Madrid (ES); SOLO DE ZALDIVAR GALVEZ, Beatriz, 28049 Madrid (ES); MARTÍNEZ CUESTA, M. Carmen, 28049 Madrid (ES); AGUAS SOLO DE ZALDIVAR, Juan M., 06400 DON BENITO (Badajoz) (ES); DORADO CIRONCHA, Tamara, 06400 DON BENITO (Badajoz) (ES)
(74) Representative: Pons
(86) International application number: PCT/ES2019/070603
(87) International publication number: WO 2020/058544

(56) References cited:
- WO-A1-2012/044242
- CN-A- 102 028 032
- CN-A- 103 431 042
- CN-A- 104 522 168
- CN-A- 104 814 124
- CN-A- 105 580 900
- CN-A- 106 172 775
- DATABASE GNPD [Online] MINTEL; 25 September 2014 (2014-09-25), anonymous: "Yogurt with Mango & Passionfruit Layer", XP055907774, Database accession no. 2686307
- LOPEZ LOPEZ D E.: "EL USO DE LA INULINA Y CHAMBURO (Carica pubescens L) EN LA TECNOLOGIA DE ELABORACION DE YOGURT CON TROZOS DE FRUTAS TIPO II EN LA QUESERA EL ''SALINERITO", Informe Final de Trabajo de Grado, 2010, pages 1-126, XP055796959, Retrieved from the Internet: URL:http://repositorio.uta.edu.ec/bitstrea m/123456789/874/3/AL4.pdf [retrieved on 2019-11-26]

## Description

The present invention falls within the sector of the agri-food industry, encompassing the dairy and vegetable sectors, providing a new fermented dairy product that is a source of fibre, with a base of vegetable jam sweetened with fibre having a low glycaemic index. In addition, the product includes the lactic bacteria *Streptococcus thermophilus* and *Lactobacillus delbrueckii* subsp. *bulgaricus,* and at least one probiotic strain that facilitates dairy fermentation and achieves the viability suitable to be able to exercise beneficial effects in human health. The product of the invention also contains fibre that contributes texturising properties and contributes to improving intestinal function.

### BACKGROUND OF THE INVENTION

In the agri-food industry, vegetable processing generates a large amount of by-products. In the case of tomato, a fraction is especially separated which contains skins and seeds and another one made up of tomato pulp or fibre. Tomato pulp or fibre corresponds to the fraction of the pericarp in contact with the epicarp (formed by the heavily cutinised epidermis and subepidermal collenchyma). It is a co-product that has a high content of soluble fibre, unlike skins and seeds characterised by the insoluble fibre content thereof.

The use of these by-products offers an opportunity to generate new resources and a requirement to minimise environmental pollution. The use of fibre in the processing of vegetables such as tomato has a lower incidence than that practiced in obtaining fibre in the processing of cereals, tomato pulp or fibre being scarcely intended for revaluation as a source of soluble fibre.

The intake of fibre in the diet has been shown to be necessary for proper intestinal functionality, with a daily recommendation of 25 g (EFSA J 2010; 8:1462). An intake of fibre greater than this minimum recommended amount has been acknowledged to contribute health benefits against cardiovascular diseases and type 2 diabetes and to favour the maintenance of an ideal weight. However, the average intake of fibre in the Spanish diet is 19 g per day (EFSA J 2010; 8:1462), which requires consumer education focussed on the importance of dietary fibre, as well as promoting strategies for fibre enrichment in foods capable of including it.

Moreover, both yoghurt and the equivalent fermented dairy products are prepared by means of the controlled bacterial growth that transforms the components of milk to produce compounds of improved nutritional value and digestibility and healthy metabolites important in one's daily diet. The contribution to human health of these fermented dairy products is due to the contribution of beneficial bacteria that can partially rebuild the diversity of the intestinal microbiota, partially lost due to the current lack of dietary fibre intake in industrialised societies. The nutritional value of fermented dairy products is acknowledged by the dietary guidelines of different countries that recommend the inclusion thereof in one's daily diet. These bacteria improve intestinal transit and strengthen the intestinal barrier. In addition, fermented dairy products can be labelled as improving the effects of lactose maldigestion when the dose of bacteria present is at least 10⁸ cfu/g (EFSA J 2010; 8:1763).

However, neither yoghurt nor equivalent fermented dairy products are commonly used in the food industry as a potential source of dietary fibre, although yoghurts which include cereals as a source of insoluble fibre using whole grain or cereal flours have been developed (WO 2013/010908 A1).

Moreover, probiotics are defined as "live microorganisms which, when administered in suitable amounts, confer a benefit to the health of the host". The development of foods with probiotics requires scientific studies that contribute knowledge about the mechanisms that explain probiotic functionality, the development of probiotics aimed at specific population groups with certain needs being of great importance. The bacterial genera mainly used as probiotics in dairy products belong to the genera *Lactobacillus* and *Bifidobacterium.* Probiotics must be viable and functional both in the food matrix and when reaching the intestine to exercise the beneficial effects thereof. Therefore, it is necessary that the amount of probiotic food consumed contributes a minimum of 10⁶-10⁷ cfu/g. Within the beneficial effect of probiotics, a new perspective has emerged that establishes a link between human brain activity and bacteria, coining the term psychobiotic (Bambury, A., Sandhu, K., Cryan, JF, & Dinan, T. G. British Journal of Pharmacology, 2017). In this context, the intestinal microbiota has signalling mechanisms that affect the neural circuits involved in motor control and behaviour. WO 2012/044242 A1 discloses the use of a food product comprising at least one viscous dietary fibre wherein said fibre has a fluidity of from about 0,3 to about 0,5 Arbitrary Bostwick Units for the prevention of decline or improvement of cognitive capacity in a subject.

CN 106 172 762 A discloses a nutritional yogurt that is prepared by using mixed fermentation broth. The fermentation broth comprises puffed oat meal, oat germ, reconstituted milk, wolfberry powder, a complex fermentation agent, a complex sugar and a complex stabilizer.

### DESCRIPTION OF THE INVENTION

The present invention relates to a new food product comprising a fermented dairy product with vegetable pulp jam, preferably made of tomato, that contains probiotic bacteria and at the same time serves as a source of fibre.

The fermented dairy product contains lactic bacteria, preferably of the species *Streptococcus thermophilus* and *Lactobacillus delbrueckii* subsp. *bulgaricus,* and at least one probiotic strain, preferably of the species *Lactobacillus rhamnosus,* since it achieves the viability suitable to be able to exercise beneficial effects in human health. This dairy fraction also contains fibre that contributes texturising properties and contributes to improving intestinal function.

The basis of the food product of the invention is a vegetable jam with fibre having a low glycaemic index, preferably oligofructose, which contributes sweetness without increasing the caloric value of the product. The strange flavour provided by vegetables to a dairy product compared to the sweeter and more scented one of fruits has favoured the use of the latter in the production of this type of food product.

Therefore, the healthy nature of the food product of the invention includes:
- Bacteria beneficial to health (for example, *Streptococcus thermophilus* and *Lactobacillus delbrueckii* subsp. *bulgaricus)* that enable the final product of the invention to improve lactose digestion. In addition, the species recommended for the fermented dairy product have a low post-acidification capacity and a highly viscous nature, so that they positively contribute to the sensory features of the final product.
- Inclusion of at least one probiotic strain. The added strain must have high scientific evidence of health benefits. A strain with a low acidification capacity such as *Lactobacillus rhamnosus* GG is recommended, which remains viable at levels of at least 10⁶-10⁷ cfu/g of the fermented dairy product, does not interfere with acidification and contributes to the good sensory evaluations of the product. At these daily supply doses, the GG strain can contribute health benefits such as, among others, improving allergic processes, atopic dermatitis, diarrhoea, respiratory tract infections and anxiety and behavioural disorders.
- High content of dietary fibre from the dairy fraction and fibre with sweetening power instead of sugar from vegetable jam. Both cause the fibre content to be at least 5% by weight of the final product, which enables the food to be identified as a "source of fibre", since it contributes at least 20% of the recommended daily allowance (PDA) of fibre. This fibre content contributes benefits in intestinal function and in the composition, variety and functionality of intestinal microbiota.

In addition, the dietary fibre added to the fermented dairy fraction has a high degree of polymerisation which facilitates the consistent texture of the product and is not degraded during fermentation by the lactic bacteria added in this fraction. Lastly, both types of fibre enhance the sensory features of the final food product of this invention.

Not belonging to the scope of the present invention, is a method of preparation which enables all the aforementioned components to be combined in a sensory-pleasing product with health benefits for the consumer that are associated with the source of fibre and the properties of the probiotic.

This method comprises: i) a first phase of preparing the product which contains vegetables in the form of jam; ii) a second phase of preparing the dairy fraction which contains the lactic bacteria, fibre and at least one probiotic strain; iii) a third phase of dosing both products in the container using the vegetable jam as a base; and iv) a fourth phase of fermentation that takes place in the same container.

The vegetable jam is prepared with more than 40% and less than 60% of the vegetable pulp or extract and the remaining sweetener, of which more than 40% is a fibre having a low degree of polymerisation and with at least 30% sweetening capacity compared to that of sucrose. This ingredient in the formulated proportion enables the postprandial glycaemic response to be reduced relative to a conventional jam made with sucrose, and it contributes at least 3 g of dietary fibre per 100 g of the food product.

Furthermore, the fermented dairy product is formulated from milk, to which skimmed milk powder (between 1% and 3%) is added to increase the percentage of non-fat solid matter in the product and, therefore, the consistency of the fermented product. In addition, dietary fibre having a high degree of polymerisation, with low glycaemic index and water retention capacity is added to the milk to improve the consistency of the final product. This ingredient contributes at least 2 g of dietary fibre to the fermented dairy product, for which reason the dietary fibre content of the product of the invention represents at least 5 g of dietary fibre per 100 g of product. Therefore, the dietary fibre content in the jam enables the final product to be identified as a "source of fibre".

For the fermentation of the dairy product, lactic bacteria selected from *Streptococcus thermophilus, Lactobacillus delbrueckii* subsp. *bulgaricus, Lactobacillus acidophilus, Lactobacillus casei, Lactobacillus delbrueckii* subsp. *lactis, Lactococcus lactis, Lactobacillus kefiranofaciens, Leuconostoc,* and the mixtures thereof are used, and they are added in an amount that provides between 10⁶ and 10⁷ cfu per ml or g of dairy product, preferably milk, in manufacturing and at least 10⁷ cfu/g during the time to market. The preferred microbial formulation is a mixture, in equivalent proportions, of *Streptococcus thermophilus* and a strain of *Lactobacillus delbrueckii* subsp. *bulgaricus* having a low acidification capacity as it enables a fermented dairy product to be obtained that is less acidic and has a creamier texture than that provided by a traditional starter culture. In addition, at least one probiotic strain is added to the product before fermentation, preferably from the genus *Lactobacillus,* and more preferably from the strain *Lactobacillus rhamnosus* GG (ATCC 53103). The probiotic strain must be included in an amount that provides between 10⁷ and 10⁸ cfu per ml or g of dairy product, preferably milk, in manufacturing.

Regarding the dosage of each of the fractions in the container, the vegetable jam must be first introduced into the container and it represents at least 10% of the final food product, on which the dairy fraction is added, which represents at least 80% of the final food product, without mixing the two fractions, and the container is then closed. This separation of the two fractions in the product of the invention (the vegetable jam at the base of the container and the solid consistency dairy fraction in the upper phase) facilitates a correct preparation of the product without interference between the two. In addition, it enables choosing how to mix these fractions at the time of consumption.

Lastly, the product is subjected to incubation at a temperature between 37 and 45°C until the dairy fraction coagulates and pH values lower than 4.5 are reached. The preparation of the product of the invention is completed by cooling it below 7°C.

In the present invention, "dietary fibre" is understood as that which contains polysaccharides resistant to hydrolysis by human digestive enzymes. Additionally, in the present invention, the dietary fibre having a low degree of polymerisation comprises polysaccharides of between 2 and 9 monomers, and the dietary fibre having a high degree of polymerisation comprises polysaccharides of between 10 and 60 monomers. In the present invention, "low glycaemic index" of a food is understood to be when the ability to release a certain amount of glucose after digestion or the bioavailability of the carbohydrates is low, or, in other words, it causes a low and even negligible intestinal absorption rate.

In the present invention, "low post-acidification capacity" of a lactic bacterium is understood as the limited or null ability to reduce the corresponding pH under the usual preservation conditions of fermented dairy products.

In the present invention, "highly viscous nature" of a substance is understood to be that when added to a mixture, the viscosity thereof increases without substantially modifying other properties.

Therefore, in a first aspect, the present invention relates a food product that comprises a fermented dairy fraction representing between 80% and 90% by weight of the final product and a second fraction that consists of a vegetable jam representing between 10% and 20% by weight of the final product, characterised in that :- the jam comprises between 40 and 60% by weight of the vegetable pulp or extract and the remaining sweetener, of which at least 40% by weight is a dietary fibre having a low degree of polymerisation and a low glycaemic index selected from oligofructose, sucralose, lactitol, kojibiose and tagatose, and wherein-the fermented dairy fraction comprises at least one lactic bacterium, dietary fibre having a high degree of polymerisation of the fermented dairy fraction selected from inulin, starch, polydextrose, pectin, galactomannan and arabinoxylan, and at least one probiotic strain.

In a preferred embodiment, the vegetables used in the preparation of the jam are selected from tomato, apple, nectarine, cherry, quince and strawberry and lemon concentrates.

In a more preferred embodiment, the jam is made of tomato, and even more preferably made of tomato pulp.

In a more preferred embodiment, the fibre having a low degree of polymerisation and a low glycaemic index in the jam is oligofructose.

In another preferred embodiment, the lactic bacterium is selected from *Streptococcus thermophilus, Lactobacillus delbrueckii* subsp. *bulgaricus, Lactobacillus acidophilus, Lactobacillus casei, Lactobacillus delbrueckii* subsp. *lactis, Lactococcus lactis, Lactobacillus kefiranofaciens, Leuconostoc,* and the mixtures thereof. And more preferably, it is a mixture, in equivalent proportions, of *Streptococcus thermophilus* and *Lactobacillus delbrueckii* subsp. *bulgaricus.*

In a more preferred embodiment, the fibre having a high degree of polymerisation of the fermented dairy fraction is inulin.

In a preferred embodiment, the probiotic strain is selected from the genera *Lactobacillus, Bifidobacterium,* and *Streptococcus,* and more preferably from the genus *Lactobacillus.* In a more preferred embodiment, the probiotic strain is *Lactobacillus rhamnosus.*

Not belonging to the scope of the present invention is a method for obtaining a food product comprising the following steps:
i) Preparing a vegetable jam comprising between 40 and 60% by weight of the vegetable pulp or extract and less than 60% by weight of sweetener, of which more than 40% is a fibre having a low degree of polymerisation;
ii) Preparing the dairy fraction based on milk, powdered milk in a proportion of between 1% and 3% by weight, dietary fibre having a high degree of polymerisation, lactic bacteria in a concentration of between 10⁶ and 10⁷ cfu per ml or g of dairy product in manufacturing, and at least one probiotic strain in a concentration of between 10⁷ and 10⁸ cfu per ml or g of dairy product in manufacturing;
iii) Optionally including a viscous starter culture with low post-acidification activity in the dairy fraction obtained in step ii);
iv) Dosing the vegetable jam obtained in step i) as a base in a container;
v) Dosing the dairy fraction obtained in step ii) or iii) on the jam, without mixing the two fractions;
vi) Incubating the product obtained in step v) at a temperature between 37 and 45°C until the dairy fraction coagulates and pH values lower than 4.5 are reached;
vii) Refrigerating the product obtained in step vi) below 7°C;
wherein the proportion of the jam represents between 10% and 20% by weight of the final product and the proportion of the dairy fraction represents between 80% and 90% by weight of the final product.

In an embodiment that does not belong to the scope of the present invention, the vegetables used in the preparation of the jam are selected from tomato, apple, nectarine, cherry, quince and strawberry and lemon concentrates.

In an embodiment that does not belong to the scope of the present invention, the jam is made of tomato, and even more preferably made of tomato pulp.

In an embodiment that does not belong to the scope of the present invention, the fibre having a low degree of polymerisation of the jam is selected from oligofructose, sucralose, lactitol, kojibiose and tagatose.

In an embodiment that does not belong to the scope of the present invention, the fibre having a low degree of polymerisation is oligofructose.

In an embodiment that does not belong to the scope of the present invention, the lactic bacterium is selected from *Streptococcus thermophilus, Lactobacillus delbrueckii* subsp. *bulgaricus, Lactobacillus acidophilus, Lactobacillus casei, Lactobacillus delbrueckii* subsp. *lactis, Lactococcus lactis, Lactobacillus kefiranofaciens, Leuconostoc,* and the mixtures thereof. And more preferably it is a mixture of *Streptococcus thermophilus, Lactobacillus delbrueckii bulgaricus.*

In an embodiment that does not belong to the scope of the present invention, the dietary fibre having a high degree of polymerisation of the fermented dairy fraction is selected from inulin, starch, polydextrose, pectin, galactomannan, and arabinoxylan.

In an embodiment that does not belong to the scope of the present invention, the fibre having a high degree of polymerisation of the fermented dairy fraction is inulin.

In an embodiment that does not belong to the scope of the present invention, the probiotic strain is selected from the genera *Lactobacillus, Bifidobacterium,* and *Streptococcus,* and more preferably from the genus *Lactobacillus.*

In an embodiment that does not belong to the scope of the present invention, the probiotic strain is *Lactobacillus rhamnosus.* Throughout the description and the claims, the word "comprises" and its variants do not intend to exclude other technical features, additives, components or steps. For those skilled in the art, other objects, advantages and features of the invention may be partially deduced from both the description and the embodiment of the invention. The following examples are provided by way of illustration and are not intended to limit the present invention.

### EXAMPLES

Next, the invention will be illustrated by means of assays carried out by the inventors that demonstrate the effectiveness of the product of the invention.

### Example 1. Preparation of jam with tomato pulp, sugar and fibre

By way of example, three jams were prepared from a tomato pulp obtained from the industrial transformation of fresh tomato. The pulp was obtained as a co-product of the industrial processing of fresh tomato concentrate and represented 1% of the tomato fruit. The tomato pulp was generated in the refining phase of the concentrate. For the purposes of this invention, a fibre content between 3.1 and 3.2 g/100 g is worth noting in the tomato pulp.

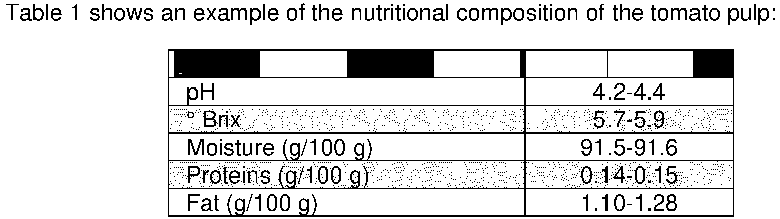

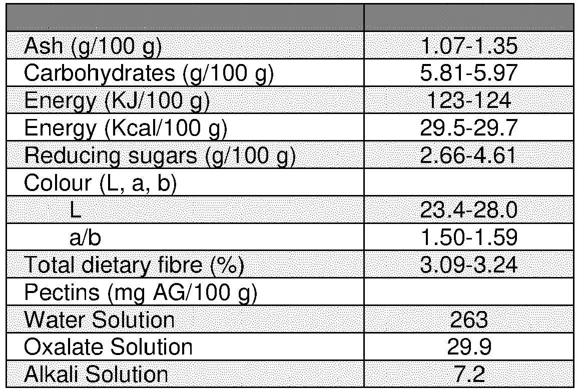

To obtain the tomato jam, the ingredients were combined, varying the proportion of sweetener:
1. Tomato pulp (1 kg) + sucrose (0.5 kg)
2. Tomato pulp (1 kg) + sucrose (0.29 kg) + oligofructose powder (Raftilosa^{®} P95 Orafti) (0.21 kg)
3. Tomato pulp (1 kg) + sucrose (0.25 kg) + liquid oligofructose (Orafti^{®} L85) (0.25 kg)

The tomato pulp was heated. Next, the sweetener (sucrose and oligofructose) was added until the texture typical of a jam was obtained. It was allowed to stand and cool off.

The general acceptance of the product was evaluated, the most organoleptically acceptable one being that made with oligofructose compared to only sucrose or the mixture of sucrose with oligofructose.

### Example 2. Preparation of a fermented dairy product with probiotics

By way of example, seven fermented dairy products were prepared with the milk-grown bacterial strains specified below:
*1. Streptococcus thermophilus* STY-31.
2. *S. thermophilus* STY-31 and *Lactobacillus delbrueckii* subsp. *bulgaricus* LBY-27.
3. *S. thermophilus* STY-31, *L. bulgaricus* LBY-27 and *Lactobacillus reuteri* DMS 17938.
4. *S. thermophilus* STY-31, *L. bulgaricus* LBY-27 and *Lactobacillus rhamnosus* GG.
5. *S. thermophilus* STY-31 and *L. reuteri* DMS 17938.
6. *S. thermophilus* STY-31 and *L. rhamnosus* GG.
7. *S. thermophilus* STY-31 and *Lactobacillus salivarius* SV1.

For the preparation of fermented dairy products, pasteurised whole milk was used, to which skimmed milk powder was added and it was inoculated with the strains indicated for products 1 to 7. The milk coagulation process was carried out by incubating the products at 44°C and stopped when a pH equal to or less than 4.5 was reached. The products were analysed to estimate the viability of the added strains. Sensory evaluation of the products was also carried out.

Regarding the quantification of probiotics, *L. rhamnosus* GG reached counts of 10⁷ cfu/g in the manufacturing process and the values remained stable throughout the shelf life, decreasing to 10⁶ cfu/g only at the end of the useful life period (28 days). Products made with *L. reuteri* DSM17938, however, were characterised by a significant decrease in the viability of the probiotic during cold preservation, with values of 10⁵ cfu/g at the end of the useful life period of the fermented dairy product. Furthermore, the probiotic *L*. *salivarius* SV1 was characterised by a very low resistance to cold preservation, with counts of 10⁴ cfu/g after 28 days of preservation.

The sensory evaluation of the products showed the following results:
- *L. reuteri* DSM17938 provides a strange taste rejected by all members of the tasting panel.
- *L. rhamnosus* GG contributes attributes of low acidity and creamy texture to the product.

### Example 3. Use of fibre and viscous starter culture in the preparation of a fermented dairy product with probiotics.

In order to improve the texture features of the fermented dairy product prepared with *L*. *rhamnosus* GG, a fermented dairy product obtained as described in product 4 of Example 2 was formulated, which included a viscous starter culture and little post-acidification activity, such as the FD-DVS YoFlex Mild 1.0 ferment by Chr. Hansen in the amounts recommended by the manufacturer, and to which inulin with a high degree of polymerisation was added in the preparation process, for example, inulin GR^{®} (ORAFTI), at 2%. The features of the fermented dairy product were a firm, creamy texture and low acidity, and the viability counts for *L. rhamnosus* GG described in Example 2 were maintained.

### Example 4. Sensory evaluation of the fermented dairy product with probiotics and tomato jam.

Tomato pulp jam was prepared as described in Example 1 and 20-30 g were added to a glass vessel. A mixture of pasteurised milk, powdered milk, the strains *S. thermophilus* STY-31, *L. bulgaricus* LBY-27, and inulin was heated as described in Examples 2 and 3. Subsequently, the FD-DVS YoFlex Mild 1.0 ferment and *L. rhamnosus* GG were added to provide starting counts of 10⁷-10⁸ cfu/ml.

The product obtained was evaluated by means of a descriptive and acceptance sensory analysis.

For the descriptive analysis, the following attributes were evaluated on a linear scale of intensity of 10 cm, from less intense (0 cm) to more intense (10 cm):
- Appearance: assessment of the overall appearance of the product.
- Syneresis: assessment of the degree of syneresis or serum separation.
- Colour: assessment of the colour of the product.
- Scent: assessment of the general scent of the product.
- Spoon consistency: assessment of the consistency of the product on the spoon.
- Flavour: assessment of the general flavour of the product.
- Texture in the mouth: assessment of the texture of the product in the mouth.
- Observations: contribution of all the necessary observations.

The acceptance sensory analysis was performed following a 7-point facial hedonic scale (like: extremely, moderately, slightly; neither like nor dislike; dislike: slightly, moderately, extremely).

The results of the sensory analysis indicated that the fermented dairy product with *L*. *rhamnosus* GG and tomato pulp jam has good appearance, colour, flavour, improved scent, and a good degree of syneresis; the weak points thereof being the spoon consistency and texture in the mouth, but with an acceptable score (6). Sensory acceptance of the product was on the hedonic "like" scale and general acceptance improved as the entire product was mixed. Among the observations of the tasters, it was indicated that it was an innovative product.

### Example 5. Study in children diagnosed with Autism Spectrum Disorders (ASD)

The fermented dairy product that is a source of fibre with tomato jam and the probiotic *L*. *rhamnosus* GG of the invention was administered daily for 6 months to 26 children diagnosed with Autism Spectrum Disorders (ASD). In this population, irregularities in food intake which may be accompanied by constipation are usually observed. In the study it was observed that of the 4 children who initially had constipation, 3 of them have noticed an improvement in their defecation pattern. In the study as a whole, it was observed that 7 children improved in their evolving capacities and of those children, 5 noticed an improvement in their defecation pattern.

## Claims

1. A food product that comprises a fermented dairy fraction representing between 80% and 90% by weight of the final product and a second fraction that consists of a vegetable jam representing between 10% and 20% by weight of the final product, **characterised in that**:
- the jam comprises between 40 and 60% by weight of a vegetable pulp or extract and a remaining sweetener, of which at least 40% by weight is a dietary fibre having a low degree of polymerisation and a low glycaemic index selected from oligofructose, sucralose, lactitol, kojibiose and tagatose, and wherein
- the fermented dairy fraction comprises at least one lactic bacterium, dietary fibre having a high degree of polymerisation of the fermented dairy fraction selected from inulin, starch, polydextrose, pectin, galactomannan and arabinoxylan, and at least one probiotic strain.

2. The product according to claim 1, wherein the vegetables used in the preparation of the jam are selected from tomato, apple, nectarine, cherry, quince and strawberry and lemon concentrates.

3. The product according to any of the preceding claims, wherein the jam is made of tomato.

4. The product according to claim 3, wherein the jam is made of tomato pulp.

5. The product according to any of the preceding claims, wherein the fibre having a low degree of polymerisation and a low glycaemic index of the jam is oligofructose.

6. The product according to any of the preceding claims, wherein the lactic bacterium is selected from *Streptococcus thermophilus, Lactobacillus delbrueckii* subsp. *bulgaricus, Lactobacillus acidophilus, Lactobacillus casei, Lactobacillus delbrueckii* subsp. *lactis, Lactococcus lactis, Lactobacillus kefiranofaciens, Leuconostoc,* and the mixtures thereof.

7. The product according to any of the preceding claims, wherein lactic bacteria are a mixture in equivalent proportions of *Streptococcus thermophilus* and *Lactobacillus delbrueckii* subsp. *bulgaricus.*

8. The product according to any of the preceding claims, wherein the dietary fibre having a high degree of polymerisation of the fermented dairy fraction is inulin.

9. The product according to any of the preceding claims, wherein the probiotic strain is selected from the genera *Lactobacillus, Bifidobacterium,* and *Streptococcus.*

10. The product according to any of the preceding claims, wherein the probiotic strain is of the species *Lactobacillus rhamnosus.*

## Patentansprüche

1. Lebensmittelprodukt, das eine fermentierte Milchfraktion, die zwischen 80 und 90 Gewichts-% des Endprodukts darstellt, und eine zweite Fraktion, die aus einer pflanzlichen Marmelade besteht, die zwischen 10 und 20 Gewichts-% des Endprodukts darstellt, umfasst, **dadurch gekennzeichnet, dass**:
- die Marmelade zu 40 bis 60 Gewichts-% eine pflanzliche Pulpe oder einen pflanzlichen Extrakt und zum Rest ein Süßungsmittel, das zu mindestens 40 Gewichts-% ein Ballaststoff mit einem niedrigen Polymerisationsgrad und einem niedrigen glykämischen Index ist, ausgewählt aus Oligofructose, Sucralose, Lactitol, Kojibiose und Tagatose, umfasst, und wobei
- die fermentierte Milchfraktion mindestens ein Milchsäurebakterium, einen Ballaststoff mit einem hohen Polymerisationsgrad der fermentierten Milchfraktion, ausgewählt aus Inulin, Stärke, Polydextrose, Pektin, Galactomannan und Arabinoxylan, und mindestens einen probiotischen Stamm umfasst.

2. Produkt gemäß Anspruch 1, wobei die bei der Zubereitung der Marmelade verwendeten Pflanzen aus Tomaten-, Apfel-, Nektarinen-, Kirsch-, Quitten- und Erdbeer- und Zitronenkonzentraten ausgewählt sind.

3. Produkt gemäß einem der vorhergehenden Ansprüche, wobei die Marmelade aus Tomaten hergestellt ist.

4. Produkt gemäß Anspruch 3, wobei die Marmelade aus Tomatenpulpe hergestellt ist.

5. Produkt gemäß einem der vorhergehenden Ansprüche, wobei der Ballaststoff mit einem niedrigen Polymerisationsgrad und einem niedrigen glykämischen Index der Marmelade Oligofructose ist.

6. Produkt gemäß einem der vorhergehenden Ansprüche, wobei das Milchsäurebakterium aus *Streptococcus thermophilus, Lactobacillus delbrueckii* Unterart *bulgaricus, Lactobacillus acidophilus, Lactobacillus casei, Lactobacillus delbrueckii* Unterart *lactis, Lactococcus lactis, Lactobacillus kefiranofaciens, Leuconostoc* und den Mischungen davon ausgewählt ist.

7. Produkt gemäß einem der vorhergehenden Ansprüche, wobei die Milchsäurebakterien eine Mischung von *Streptococcus thermophilus* und *Lactobacillus delbrueckii* Unterart *bulgaricus* in gleichen Anteilen sind.

8. Produkt gemäß einem der vorhergehenden Ansprüche, wobei der Ballaststoff mit einem hohen Polymerisationsgrad der fermentierten Milchfraktion Inulin ist.

9. Produkt gemäß einem der vorhergehenden Ansprüche, wobei der probiotische Stamm aus den Gattungen *Lactobacillus, Bifidobacterium* und *Streptococcus* ausgewählt ist.

10. Produkt gemäß einem der vorhergehenden Ansprüche, wobei der probiotische Stamm von der Art *Lactobacillus rhamnosus* ist.

## Revendications

1. Produit alimentaire qui comprend une fraction laitière fermentée représentant entre 80 % et 90 % en poids du produit final et une seconde fraction qui est constituée d'une confiture végétale représentant entre 10 % et 20 % en poids du produit final, **caractérisé en ce que** :
- la confiture comprend entre 40 et 60 % en poids d'une pulpe ou d'un extrait végétal, le reste étant un édulcorant, dont au moins 40 % en poids est une fibre alimentaire ayant un faible degré de polymérisation et un faible indice glycémique choisie parmi l'oligofructose, le sucralose, le lactitol, le kojibiose et le tagatose, et dans lequel
- la fraction laitière fermentée comprend au moins une bactérie lactique, une fibre alimentaire ayant un degré élevé de polymérisation de la fraction laitière fermentée choisie parmi l'inuline, l'amidon, le polydextrose, la pectine, le galactomannane et l'arabinoxylane, et au moins une souche probiotique.

2. Produit selon la revendication 1, dans lequel les légumes utilisés dans la préparation de la confiture sont choisis parmi les concentrés de tomate, de pomme, de nectarine, de cerise, de coing et de fraise et de citron.

3. Produit selon l'une quelconque des revendications précédentes, dans lequel la confiture est faite de tomate.

4. Produit selon la revendication 3, dans lequel la confiture est faite de pulpe de tomate.

5. Produit selon l'une quelconque des revendications précédentes, dans lequel la fibre ayant un faible degré de polymérisation et un faible indice glycémique de la confiture est l'oligofructose.

6. Produit selon l'une quelconque des revendications précédentes, dans lequel la bactérie lactique est choisie parmi *Streptococcus thermophilus, Lactobacillus delbrueckii* sous-espèce *bulgaricus, Lactobacillus acidophilus, Lactobacillus casei, Lactobacillus delbrueckii* sous-espèce *lactis, Lactococcus lactis, Lactobacillus kefiranofaciens, Leuconostoc,* et leurs mélanges.

7. Produit selon l'une quelconque des revendications précédentes, dans lequel les bactéries lactiques sont un mélange en proportions équivalentes de *Streptococcus thermophilus* et *Lactobacillus delbrueckii* sous-espèce *bulgaricus.*

8. Produit selon l'une quelconque des revendications précédentes, dans lequel la fibre alimentaire ayant un degré élevé de polymérisation de la fraction laitière fermentée est l'inuline.

9. Produit selon l'une quelconque des revendications précédentes, dans lequel la souche probiotique est sélectionnée parmi les genres *Lactobacillus, Bifidobacterium* et *Streptococcus.*

10. Produit selon l'une quelconque des revendications précédentes, dans lequel la souche probiotique est de l'espèce *Lactobacillus rhamnosus.*
